(19) Europäisches Patentamt
European Patent Office
Office européen des brevets

(11) **EP 1 921 422 B1**

(12) **EUROPÄISCHE PATENTSCHRIFT**

(45) Veröffentlichungstag und Bekanntmachung des Hinweises auf die Patenterteilung:
**11.08.2010  Patentblatt 2010/32**

(51) Int Cl.:
*G01C 21/36* (2006.01)       *G09B 29/10* (2006.01)
*G06T 11/60* (2006.01)

(21) Anmeldenummer: **07019325.5**

(22) Anmeldetag: **02.10.2007**

(54) **Vorrichtung und Verfahren zur Erstellung eines Textobjekts**

Method and device for generating a text object

Dispositif et procédé d'établissement d'un objet textuel

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **07.11.2006  DE 102006052663**

(43) Veröffentlichungstag der Anmeldung:
**14.05.2008  Patentblatt 2008/20**

(73) Patentinhaber: **Navigon AG**
**20251 Hamburg (DE)**

(72) Erfinder:
• **Hess, Philipp**
 **22927 Großhansdorf (DE)**
• **Thomas, Bernd, Dr.**
 **71088 Holzgerlingen (DE)**

(74) Vertreter: **von den Steinen, Axel**
**Advotec.**
**Patent- und Rechtsanwälte**
**Beethovenstrasse 5**
**97080 Würzburg (DE)**

(56) Entgegenhaltungen:
**EP-A- 0 940 795      EP-A- 1 174 843**
**WO-A-00/63848      JP-A- 10 301 929**
**US-A- 5 852 447      US-A1- 2006 235 825**

EP 1 921 422 B1

**Beschreibung**

Die Erfindung betrifft eine Vorrichtung zur Erstellung einer grafischen Anzeige einer insbesondere geographischen Darstellung mit einem Textobjekt gemäß dem Oberbegriff des Patentanspruchs 1, sowie ein Verfahren zur Erstellung eines Textobjekts gemäß Patentanspruch 9.

Vorrichtungen bzw. Verfahren zur Anzeige beispielsweise geographischer oder kartographische Darstellungen - wobei die geographischen Darstellungen Textobjekte umfassen - kommen häufig beispielsweise bei Navigationssystemen zum Einsatz. Im Anwendungsfall bei Navigationssystemen ist es im Allgemeinen notwendig, geographische Darstellungen und dabei insbesondere Kartendarstellungen so aufzubereiten, dass sich diese auf einer zum Navigationssystem gehörenden Anzeigeeinrichtung, beispielsweise auf einem Bildschirm, darstellen lassen.

Zusätzlich zur Anzeige von geographischen Darstellungen bzw. Kartendarstellungen ist es jedoch bei Navigationssystemen zumeist notwendig, auf dem Bildschirm auch Textobjekte zur Anzeige zu bringen. Derartige Textobjekte dienen dabei im allgemeinen der textlichen Bezeichnung bestimmter auf der Anzeigeeinrichtung des Navigationssystems momentan dargestellter geographischer Merkmale, bzw. der Bezeichnung von Kartenmerkmalen wie beispielsweise von Städten, Straßen, Sehenswürdigkeiten, Landschaftsmerkmalen usw.

Gebräuchliche Navigationssysteme besitzen jedoch zumeist vergleichsweise kleine Anzeigeeinrichtungen oder Bildschirme, auf denen häufig eine Vielzahl von grafischen Informationen wie auch zusätzlich Textinformationen dargestellt werden müssen. So werden zur besseren Orientierung des Benutzers eines Navigationssystems beispielsweise Straßen, Städte und andere geographische oder Landschaftsmerkmale im allgemeinen mit einer textlichen Bezeichnung versehen, welche - zusätzlich zu der grafischen Darstellung der entsprechenden Merkmale selbst - auf der zur Verfügung stehende Fläche auf dem Bildschirm untergebracht werden muss.

Dabei tritt im Stand der Technik häufig das Problem auf, dass der auf dem Bildschirm der Navigationseinrichtung verfügbare Platz bzw. Textdarstellungsbereich oftmals nicht ausreicht, um die zur Information des Benutzers vorgesehenen oder notwendigen Textinformationen in der gewünschten Ausführlichkeit und zudem in einer lesbaren Größe auf den Bildschirm zu bringen.

Dies bedeutet, dass im Stand der Technik als häufiger Kompromiss nur ein Teil der eigentlich erforderlichen oder wünschenswerten Textinformationen tatsächlich auf den Bildschirm gebracht werden kann. Alternativ werden bei aus dem Stand der Technik beispielsweise bekannten Navigationseinrichtungen Textinformationen entweder nur abgekürzt dargestellt, was die Lesbarkeit und intuitive Erfassbarkeit der Informationen verschlechtert, oder aber es wird eine sehr kleine Textgröße gewählt, was ebenfalls oft zu einer ungenügenden Erkennbarkeit führt. Gegebenenfalls kann dies sogar zu einem Sicherheitsproblem führen, falls nämlich der Benutzer eines Navigationssystems einen zu großen Teil seiner Konzentration darauf verwenden muss, unleserliche oder schwer erkennbare Texte wie beispielsweise Straßenbezeichnungen vom Bildschirm des Navigationssystems abzulesen.

Die EP 1174843 beschreibt eine Anzeigevorrichtung und ein entsprechendes Verfahren, wobei der Name eines Ortes auf einer Karte in Abhängigkeit von der Entfernung des Ortes von aktuellen Standort unterschiedlich groß dargestellt wird.

Die US 2006/235825 A1 beschreibt eine Anzeigevorrichtung mit Prozessoreinrichtung zur Erzeugung einer graphischen Anzeige einer graphischen Darstellung. Beschrieben wird ein Verfahren für die Visualisierung einer graphischen Darstellung, in der Elemente der graphischen Darstellung als zusammenhängender Schriftzug gezeichnet werden. Dazu werden Knoteninformationen und Kanteninformationen über ein Eingabemittel eingegeben, und anhand dieser Information wird der Schriftzug auf der Anzeigevorrichtung dargestellt. Dabei können die Kanten einen Schriftzug mit graduell abnehmender Schriftgröße aufweisen, um einen Richtungseindruck zu vermitteln.

Für die Verwendung zur Visualisierung von geographischen Merkmalen und den diesen Merkmalen zugeordneten Textobjekten ist dieses Verfahren nicht vorgesehen.

Mit diesem Hintergrund ist es die Aufgabe der vorliegenden Erfindung, eine Vorrichtung bzw. ein Verfahren zur Erstellung eines Textobjekts auf einer Anzeigevorrichtung zu schaffen, mit der bzw. mit dem sich die genannten, im Stand der Technik vorzufindenden Nachteile überwinden lassen. Insbesondere umfasst die Aufgabe dabei die Schaffung einer Möglichkeit, auch größere Textobjekte auf kleinen Navigationsbildschirmen anzeigen zu können, ohne dass hierzu anderweitig benötigter Platz auf dem Bildschirm in Anspruch genommen wird. Das Verfahren und die Vorrichtung sollen ferner flexibel an die jeweils darzustellende Textmenge angepasst werden können bzw. sich selbsttätig an diese anpassen.

Diese Aufgabe wird durch eine Vorrichtung gemäß Patentanspruch 1, bzw. durch ein Verfahren mit den Merkmalen des Patentanspruchs 9 gelöst.

Bevorzugte Ausführungsformen sind jeweils Gegenstand der Unteransprüche.

Die erfindungsgemäße Vorrichtung umfasst dabei in für sich genommen zunächst einmal bekannter Weise eine Anzeigevorrichtung mit einer Prozessoreinrichtung, die zur grafischen Anzeige einer geographischen Darstellung, insbesondere einer Kartendarstellung, auf der Anzeigevorrichtung eingerichtet ist. Die geographische Darstellung umfasst zumindest ein aus einer Mehrzahl von Buchstaben bestehendes Textobjekt, beispielsweise zur Kennzeichnung eines geographischen Merkmals der Kartendarstellung auf der Anzeigevorrichtung. Dabei ist die Prozessoreinrichtung zur insbesondere verkürzenden Umformung des Textobjekts zum Zweck der platzsparenden Anzeige auf der Anzeigeeinheit eingerichtet.

Erfindungsgemäße jedoch zeichnet sich die Vorrichtung dadurch aus, dass das umgeformte Textobjekt mehrere Buchstaben umfasst, deren Größenabmessungen und/oder Abstände relativ zur Originalgröße der restlichen Buchstaben des Textobjekts, bzw. relativ zu den Abständen der restlichen Buchstaben verkleinert bzw. komprimiert sind.

Auf diese Weise wird es möglich, auch vergleichsweise große Textobjekte, beispielsweise lange Straßennamen und dergleichen auf den oftmals verhältnismäßig kleinen Anzeigeeinrichtungen von Navigationssystemen darzustellen, ohne dass eine die Lesbarkeit beeinträchtigende Abkürzung der Textobjekte erfolgen muss. Ebenso kann auf die im Stand der Technik häufig anzutreffende Darstellung von kompletten Textobjekten in winzigen, kaum mehr zu entziffernden Schriftgrößen verzichtet werden.

Zur Verwirklichung der Erfindung ist es dabei zunächst einmal nicht wesentlich, welche der Buchstaben des Textobjekts in Originalgröße, und welche der Buchstaben des Textobjekts verkleinert bzw. unter Verkleinerung der Buchstabenabstände dargestellt werden.

Gemäß einer bevorzugten Ausführungsform der Erfindung weist jedoch zumindest einer, bzw. weisen vorzugsweise mehrere Buchstaben am Anfang des Textobjekts die Originalgröße auf, während alle nachfolgenden Buchstaben des Textobjekts relativ zur Originalgröße verkleinert oder komprimiert sind, bzw. verkleinerte Abstände aufweisen.

Dies ist vorteilhaft insofern, als der Anfangsbuchstabe bzw. der Wortbeginn eine besonders große Bedeutung für die schnelle Erkennbarkeit der Bedeutung eines Wortes hat. Dies gilt umso mehr beispielsweise bei Straßennamen, da diese zumeist Endungen wie -straße, -weg, -allee usw. aufweisen, deren Informationsgehalt im Vergleich zum Wortanfang gering ist. Bei dieser Ausführungsform der Erfindung weist mit anderen Worten der Anfangsbuchstabe, bzw. der Wortanfang des Textobjekts die Originalgröße bzw. eine zu definierende Maximalgröße auf, während die nachfolgenden, restlichen Buchstaben des Textobjekts entsprechend verkleinert oder komprimiert sind und/oder mit verkleinerten Abständen versehen sind. Auf diese Weise kann das ganze Textobjekt auf dem Bildschirm dargestellt werden und es kann auf eine möglicherweise sinnentstellende Abkürzung verzichtet werden, wobei gleichzeitig - aufgrund der Verkleinerung bzw. Komprimierung des hinteren Teils des Textobjekts - das Textobjekt erheblich weniger Platz auf dem Bildschirm beansprucht.

Gemäß einer weiteren Ausführungsform der Erfindung ist ebenfalls vorgesehen, dass zumindest ein Buchstabe am Anfang des Textobjekts die Originalgröße bzw. eine zu definierende Maximalgröße aufweist, wobei hingegen eine Mehrzahl nachfolgender Buchstaben des Textobjekts in Leserichtung sukzessive kleiner werdende Größenabmessungen und/oder Abstände aufweisen.

Diese Ausführungsform der Erfindung ermöglicht einen gleichmäßigeren Verlauf zwischen den Buchstaben am Anfang des Textobjekts, die auf dem Bildschirm ihre Originalgröße aufweisen, und den Buchstaben am Ende des Textobjekts, die auf dem Bildschirm entsprechend kleinere Größenabmessungen und/oder Abstände besitzen. Die Vorteile diese Ausführungsform kommen somit insbesondere der weiteren Verbesserung der Lesbarkeit entgegen.

Gemäß einer weiteren Ausführungsform ist vorgesehen, dass zumindest zwei Buchstaben am Ende des Textobjekts dieselben relativen Größenabmessungen und/oder dieselben Abstände voneinander aufweisen. Im Unterschied zu der vorstehenden Ausführungsform bedeutet dies, dass gegen Ende des Textobjekts ab einem gewissen Punkt keine weitere Verkleinerung nachfolgender Buchstaben erfolgt, da dies nur noch zu wenig zusätzlicher Platzersparnis führt, wohingegen die weitere Verkleinerung der Buchstaben lediglich die Erkennbarkeit des Textobjekts beeinträchtigen würde.

Weitere Ausführungsformen der Erfindung sehen vor, dass zunächst einmal jeweils zumindest ein Buchstabe am Anfang sowie am Ende des Textobjekts die Originalgröße aufweist. Dazwischen liegende Buchstaben hingegen sind relativ zur Originalgröße verkleinert bzw. komprimiert und/oder weisen verkleinerte Abstände auf. Dabei können die dazwischen liegenden Buchstaben beispielsweise alle gleichermaßen stark verkleinert sein, oder es kann zunächst eine sukzessive Verkleinerung entlang der Leserichtung beispielsweise bis zur Mitte des Textobjekts und anschließend wieder eine sukzessive Vergrößerung entlang der Leserichtung bis zum Ende des Textobjekts erfolgen. Auf diese Weise lässt sich eine starke Verkleinerung des von dem Textobjekt in Anspruch genommenen Platzes auf dem Bildschirm erreichen, während gleichzeitig wesentliche Bestandteile seines Erscheinungsbilds - insbesondere der Charakter der sog. Hüllkurve - erhalten bleiben, welche für die intuitive Erfassbarkeit des gesamten Textobjekts mit einem Blick verantwortlich sind.

Gemäß einer weiteren, bevorzugten Ausführungsform der Erfindung weisen bei einem Textobjekt die Buchstaben jeweils zumindest einer Wortsilbe am Anfang sowie am Ende des Textobjekts die Originalgröße auf, während die Buchstaben zumindest einer zwischen Anfangssilbe und Endsilbe liegenden Wortsilbe relativ zur Originalgröße bzw. Ursprungsgröße verkleinert sind und/oder verkleinerte Abstände aufweisen.

Durch diese Ausführungsform wird die Lesbarkeit des Textobjekts weiter verbessert, da bei der Verkleinerung der Buchstaben bzw. deren Abstände auf die Silbengrenzen des Textobjekts geachtet wird. Deshalb treten bei dieser Ausführungsform nur die Buchstaben jeweils kompletter Silben in Originalgröße bzw. in modifizierter Größe auf, wohingegen Größensprünge nur an Silbengrenzen vorhanden sind.

Nach einer weiteren bevorzugten Ausführungsform der Erfindung ist vorgesehen, dass die Größenabmessungen umgeformter Buchstaben des Textobjekts lediglich in einer Dimension, und dabei vorzugsweise in der x-Richtung verändert sind. Diese Ausführungsform ist vorteilhaft insofern, als auf diese Weise nur die Länge des Textobjekts reduziert wird, während die Höhe der Buchstaben unverändert bleibt. Auf diese Weise lässt sich der für das Textobjekt zur Verfügung stehende Platz bzw. Darstellungsbereich auf dem Bildschirm des Navigationsgeräts besonders gut ausnutzen. Außerdem lässt sich auf diese Weise die für die intuitive Erkennbarkeit eines Wortes oder Textobjekts mit entscheidende Hüllkurve trotz der Platzersparnis auf dem Bildschirm besonders gut erhalten.

Schließlich ist gemäß einer weiteren, besonders bevorzugten Ausführungsform der Erfindung vorgesehen, dass die erfindungsgemäße Vorrichtung zur automatischen Ermittlung der maximalen Größenabmessung jedes Buchstabens des Textobjekts eingerichtet ist, wobei die Festlegung der maximalen Buchstabengröße in Abhängigkeit des für das Textobjekt auf dem Bildschirm beispielsweise einer Navigationseinrichtung zur Verfügung stehenden Darstellungsbereichs sowie in Abhängigkeit der Anzahl der Buchstaben des Textobjekts erfolgt.

Weiterhin betrifft die Erfindung ein Verfahren zur Erstellung eines aus einer Mehrzahl von Buchstaben bestimmter Buchstabengröße bzw. Buchstabenweite bestehenden Textobjekts mit dem Zweck der Darstellung des Textobjekts auf einer grafischen Anzeigeeinheit anhand einer Prozessoreinrichtung.

Dabei umfasst das Textobjekt mehrere Buchstaben, deren Größenabmessungen und/oder Abstände relativ zur Originalgröße bzw. relativ zu den Abständen der restlichen Buchstaben des Textobjekts verkleinert sind.

Das erfindungsgemäße Verfahren umfasst dabei die nachfolgend angegebenen Verfahrensschritte.

Es wird zunächst in einem ersten Verfahrenschritt ein mathematischer Funktionszusammenhang festgelegt, der die Größenabmessung des Buchstabens und/oder den Buchstabenabstand mit der Position eines Buchstabens innerhalb des Textobjekts verknüpft, wobei der gewählte Funktionszusammenhang zumindest die Variablen "laufende Nummer des Buchstabens", "Anzahl der Buchstaben im Textobjekt", "aktuelle Buchstabenweite", "maximale Buchstabenweite" und "minimale Buchstabenweite" umfasst.

Anschließend wird in einem weiteren Verfahrenschritt das Integral über dem gewählten mathematischen Funktionszusammenhang von 1 bis zur Anzahl der Buchstaben im Textobjekt gebildet, wonach in einem weiteren Verfahrenschritt das gebildete Integral mit der maximal zulässigen Länge des Textobjekts gleichgesetzt wird.

Sodann wird in einem weiteren Verfahrenschritt die erhaltene Integralgleichung anhand eines gegebenen Werts für die maximale Buchstabenweite nach der Unbekannten "minimale Buchstabenweite", bzw. anhand eines gegebenen Werts für die minimale Buchstabenweite nach der Unbekannten "maximale Buchstabenweite" aufgelöst.

Anschließend wird in einem weiteren Verfahrenschritt durch Einsetzen der Zahlenwerte für die minimale Buchstabenweite, für die maximale Buchstabenweite, für die Anzahl der Buchstaben im Textobjekt und für die laufende Nummer des aktuellen Buchstabens in den gewählten mathematischen Funktionszusammenhang die Buchstabenweite jedes Buchstabens des Textobjekts und/oder die jeweiligen Abstände zwischen den Buchstaben des Textobjekts ermittelt.

Schließlich erfolgt in einem weiteren Verfahrenschritt die Ansteuerung der Anzeigeeinheit in Übereinstimmung mit den ermittelten Größen und/oder Abständen der einzelnen Buchstaben des Textobjekts durch die Prozessoreinrichtung.

Dank des erfindungsgemäße Verfahrens lässt sich somit anhand des für die Bildschirmdarstellung des Textobjekts maximal zur Verfügung stehenden Darstellungsbereichs sowie anhand eines gegebenen mathematischen Funktionszusammenhangs automatisch ein umgeformtes Textobjekt erhalten, bei dem die einzelnen Buchstaben bzw. Buchstabenabstände in Abhängigkeit des zur Verfügung stehenden Darstellungsbereichs so umgeformt sind, dass sie jeweils ihre maximal zulässige Größe annehmen.

Das erfindungsgemäße Verfahren lässt sich dabei zunächst einmal unabhängig von dem gewählten mathematischen Funktionszusammenhang verwirklichen. Gemäß einer bevorzugten Ausführungsform jedoch entspricht der mathematische Funktionszusammenhang einer Geradengleichung mit negativer Steigung. Dies entspricht einem Textobjekt, bei dem die Buchstaben beginnend am Anfang des Textobjekts in Leserichtung sukzessive linear kleiner werden. Diese Ausführungsform der Erfindung hat insbesondere den Vorteil, besonders einfach umsetzbar zu sein und lediglich ein Minimum an Rechenleistung zur Bestimmung der Buchstabengrößen des Textobjekts zu erfordern.

Gemäß einer weiteren Ausführungsform des erfindungsgemäßen Verfahrens entspricht der mathematische Funktionszusammenhang einer fallenden Kurve mit Linkskrümmung. Diese Ausführungsform des erfindungsgemäße Verfahrens führt zu einer besonders wirksamen und besonders platzsparenden Umformung des Textobjekts, da Buchstabengröße bzw. Buchstabenabstände beginnend am Anfang des Textobjekts in Leserichtung besonders schnell abfallen, gegen Ende jedoch nur noch geringfügig weiter reduziert werden.

Gemäß weiterer Ausführungsformen des erfindungsgemäßen Verfahrens entspricht der mathematische Funktionszusammenhang einer fallenden Kurve mit sich anschließendem horizontal verlaufenden Endabschnitt, bzw. einer im Bereich des Endes des Textobjekts wieder zunehmenden Kurve. Erstere Ausführungsform besitzt insbesondere den Vorteil einer anfangs schnell abnehmender Buchstabengröße bzw. eines anfangs schnell abnehmenden Buchstabenabstands, wobei Buchstabengröße bzw. Buchstabenabstände im Sinne einer besseren Lesbarkeit im Bereich des Endes des Textobjekts bzw. Wortes konstant bleiben, anstelle weiter abzunehmen. Letztere Ausführungsform ist vorteilhaft insofern, als sich dadurch ebenfalls eine bessere Lesbarkeit ergibt, da nur der Mittelteil des Textobjekts bzw. Wortes verkleinert ist und die Hüllkurve somit besser erhalten bleibt.

Nach weiteren, bevorzugten Ausführungsformen des erfindungsgemäßen Verfahrens ist vorgesehen, dass der mathematische Funktionszusammenhang einer abnehmenden Gauß-Klammer, bzw. einer im Bereich des Textanfangs abnehmenden und im Bereich des Textendes wieder zunehmenden Gauß-Klammer entspricht. Der diesbezügliche Einsatz der - auch als Ganzzahl-Funktion bezeichneten - Gauß-Klammer ist dabei zunächst einmal vorteilhaft insofern, als damit eine weiter verbesserte Lesbarkeit erzielt wird, da in diesem Fall jeweils mehrere Buchstaben dieselbe Größe aufweisen. Die im Bereich des Textanfangs abnehmende und im Bereich des Textendes wieder zunehmende Gauß-Klammer ist besonders vorteilhaft insofern, als auf diese Weise sowohl Wortanfang als auch Wortende im Sinne der intuitiven Erfassbarkeit des Textobjekts besser erkennbar sind.

Gemäß einer weiteren, besonders bevorzugten Ausführungsform des erfindungsgemäßen Verfahrens ist schließlich vorgesehen, dass die infolge des Einsatzes der Gauß-Klammer als mathematischem Funktionszusammenhang auftretenden Größensprünge innerhalb des Textobjekts an Silbengrenzen des Textobjekts platziert werden. Dank dieser Ausführungsform wird eine besonders gute intuitive Erkennbarkeit des umgeformten Textobjekts dadurch erzielt, dass die silbenweise Darstellung - ähnlich wie bei der üblichen Silbentrennung - betont wird, was dem Auge zusätzliche Informationen zur raschen und mühelosen Erkennung des Textobjekts bzw. Wortes liefert.

Im Folgenden wird die Erfindung anhand lediglich Ausführungsbeispiele darstellender Zeichnungen näher erläutert.

Es zeigt

**Fig. 1** in schematischer Darstellung linear fallenden mathemati- schen Funktionszusammenhang und zugehöriges Textob- jekt gemäß einer Ausführungsform der vorliegenden Er- findung;

**Fig. 1a** den Wortanfang des Textobjekts gemäß **Fig. 1** in Origi- nalgröße ohne umgeformte Buchstaben;

**Fig. 2** in einer **Fig. 1** entsprechenden Darstellung linear fallen- den und konstant endenden mathematischen Funktionszu- sammenhang und Textobjekt gemäß einer weiteren Aus- führungsform der vorliegenden Erfindung;

**Fig. 3** in einer **Fig. 1** und **3** entsprechenden Darstellung linear fallenden und linear wieder ansteigenden mathemati- schen Funktionszusammenhang und zugehöriges Textob- jekt gemäß einer weiteren Ausführungsform der vorlie- genden Erfindung;

**Fig. 4** in einer **Fig. 1, 3** und **4** entsprechenden Darstellung als fallende Gauß-Klammer ausgebildeten mathemati- schen Funktionszusammenhang und zugehöriges Textobjekt gemäß einer weiteren Ausführungsform der vorliegenden Erfindung;

**Fig. 5** in einer **Fig. 1** und **3** bis **5** entsprechenden Darstellung als fallende und wieder ansteigende Gauß-Klammer aus- gebildeten mathematischen Funktionszusammenhang und zugehöriges Textobjekt gemäß einer weiteren Ausfüh- rungsform der vorliegenden Erfindung; und

**Fig. 6** beispielhafte Ablaufdarstellung einer Ausführungsform des erfindungsgemäßen Verfahrens.

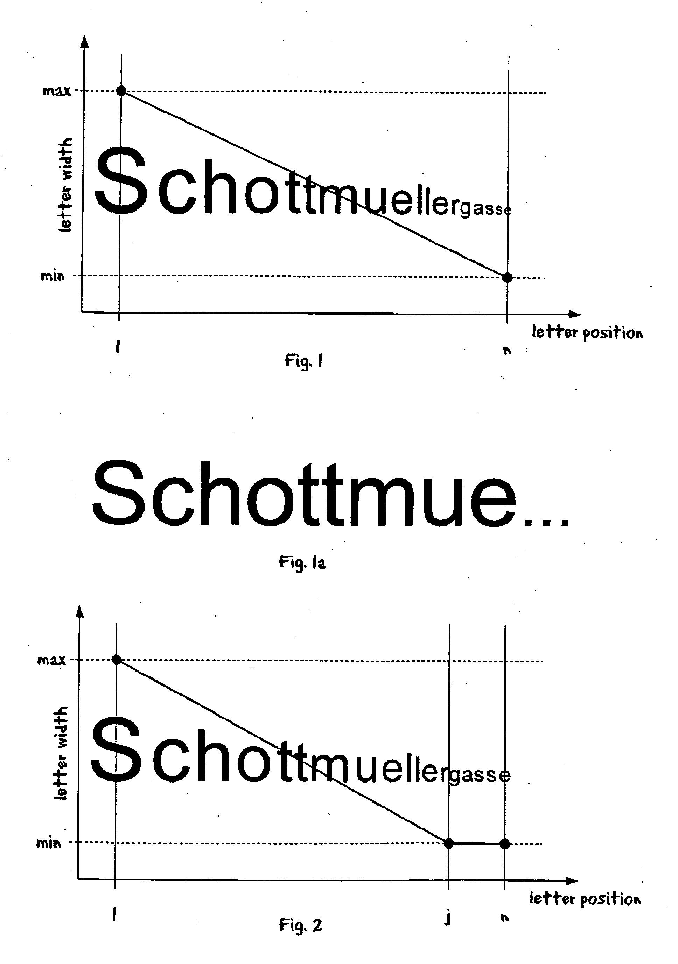

**Fig. 1** sowie **2** bis **5** zeigen in schematischer Darstellung jeweils einen mathematischen Funktionszusammenhang zur Umformung eines Textobjekts sowie ein in Übereinstimmung mit dem jeweiligen mathematischen Funktionszusammenhang umgeformtes Textobjekt.

Dabei entspricht der Funktionszusammenhang gemäß **Fig. 1** einer linear fallenden Linie. Dies bedeutet, dass die Buchstaben des Textobjekts gemäß **Fig. 1** eine in Leserichtung gleichförmig abnehmende Buchstabengröße sowie einen ebenfalls gleichförmig abnehmenden Buchstabenabstand aufweisen.

Zur Verdeutlichung des stark reduzierten Platzbedarfs eines dergestalt umgeformten Textobjekts ist in **Fig. 1a** der Anfang desselben Textobjekts, jedoch ohne Umformung dargestellt. Man erkennt, dass die ursprüngliche Länge des Textobjekts den auf dem Zeichenblatt zur Verfügung stehenden Platz bzw. Darstellungsbereich bereits bei weitem sprengt.

**Fig. 2** zeigt einen alternativen mathematischen Funktionszusammenhang sowie das mit Hilfe dieses Funktionszusammenhangs umgeformte zugehörige Textobjekt. Der Funktionszusammenhang gemäß **Fig. 2** entspricht dabei zunächst der linear fallenden Geraden gemäß **Fig. 1,** wobei sich im Bereich des Endes des Textobjekts ein Geradenstück mit der Steigung null anschließt. Auch auf diese Weise wird eine sehr effektive Kompression des Textobjekts erreicht, wobei jedoch im Sinne der besseren Lesbarkeit vermieden wird, dass die Buchstaben im Bereich des Endes des Textobjekts eine bestimmte Minimalgröße unterschreiten.

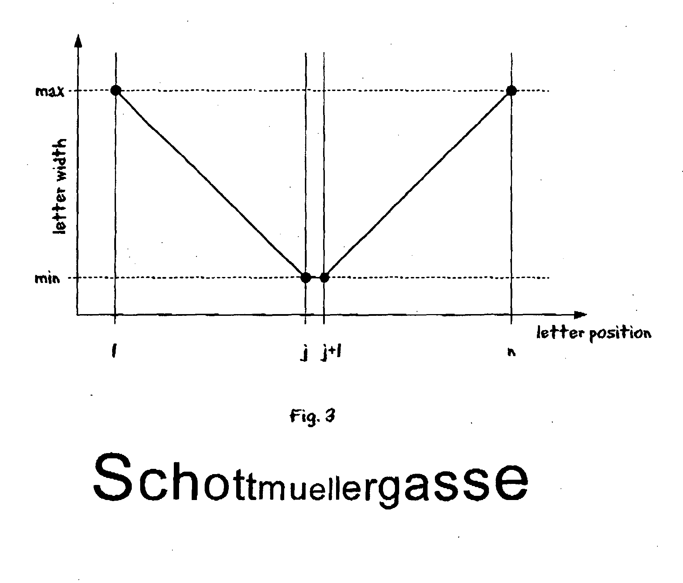

Gemäß Darstellung in **Fig. 3** entspricht der mathematische Funktionszusammenhang wieder einer zunächst linear fallenden Funktion, an die sich ein kurzes Geradenstück mit der Steigung Null sowie anschließend eine wieder linear ansteigende Gerade anschließt. Auch auf diese Weise wird noch eine effektive Kompression des zugehörigen Textobjekts gemäß **Fig. 3** erreicht, wobei jedoch eine im Wesentlichen symmetrische Gestalt bzw. Hüllkurve für das Textobjekt erhalten bleibt. Auf diese Weise lässt sich die intuitive und rasche Erkennbarkeit des Textobjekts auf einen Blick verbessern, insbesondere da die zur schnellen Erfassung eines ganzen Wortes bzw. Textobjekts besonders bedeutsamen Anfangs- wie auch Endbuchstaben in der ursprünglichen Originalgröße verbleiben, bzw. die Maximalgröße aufweisen.

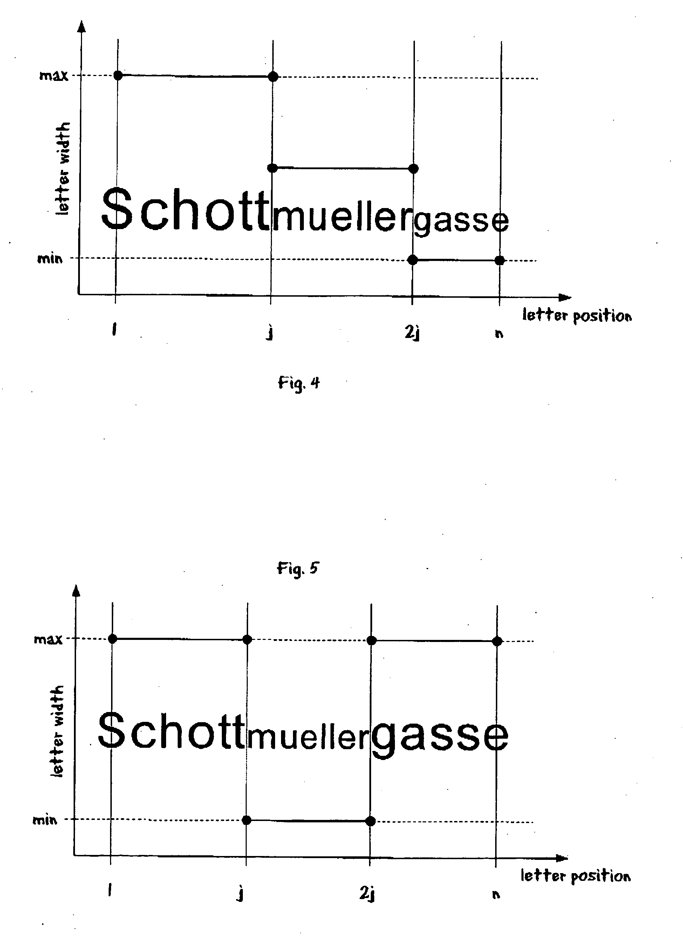

Gemäß der Darstellungen der **Fig. 4** und **5** wird als mathematischer Funktionszusammenhang jeweils eine sog. Gauß-Klammer verwendet. Die auch als Ganzzahl-Funktion, Floor-Funktion oder Abrundungsfunktion bezeichnete Gauß-Klammer liefert als Ausgabewert jeweils die größte ganze Zahl, die kleiner oder gleich dem Eingabewert ist. Durch Einsatz der Gauß-Klammer lässt sich eine stufenweise Veränderung der Buchstabengrößen und -abstände realisieren, wie dies aus den **Fig. 4** und **5,** insbesondere aus den jeweils zugehörigen umgeformten Textobjekten hervorgeht.

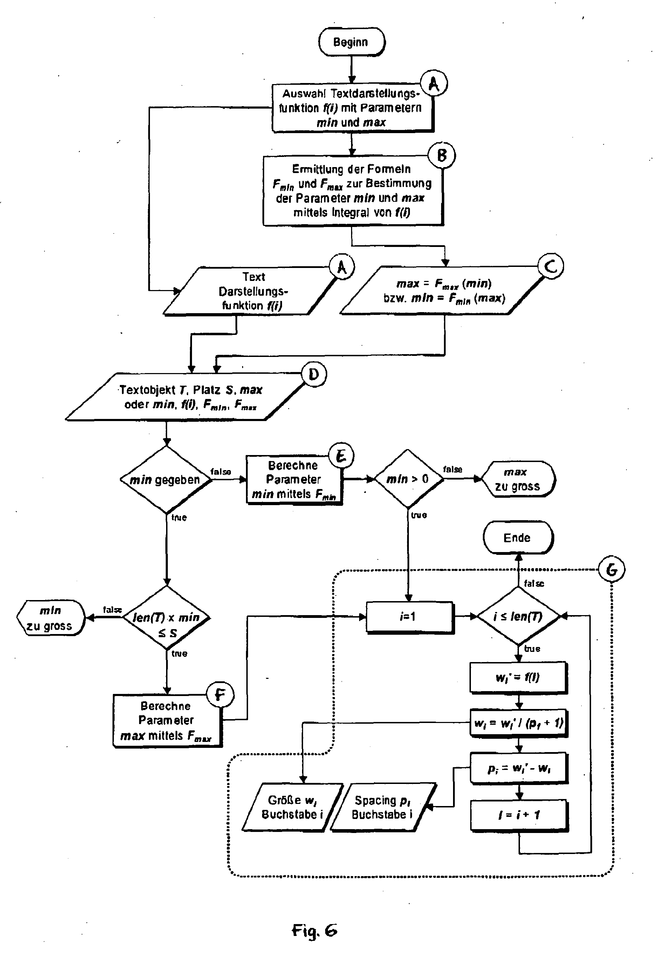

In **Fig. 6** ist beispielhaft eine Ablaufdarstellung einer Ausführungsform des erfindungsgemäßen Verfahrens gezeigt.

Dem dargestellten Ablauf liegen dabei zunächst einmal die nachfolgend angegebenen Vereinbarungen und Variablenbezeichnungen zugrunde:

- $T$ sei ein darzustellendes Textobjekt und n die Länge (Anzahl der Buchstaben) des Textobjekts;

- Mit $T_i$ wird der $i$-te Buchstabe des Textobjekts $T$ referenziert, $w_i$ gibt die Größe des Buchstabens $T_i$ an;

- $min$ sei die minimale Darstellungsweite (Buchstabengröße einschließlich Buchstabenabstand), die ein Buchstabe annehmen darf;

- $max$ sei die maximale Darstellungsweite, die ein Buchstabe annehmen darf;

- unabhängig von $min$ oder $max$ gelte, dass jedem Buchstaben des Alphabets gleich viel Platz zur Darstellung zur Verfügung gestellt wird (Bsp.: die Darstellung des Buchstabens "I" beansprucht genauso viel Platz wie die Darstellung des Buchstabens "X");

- $S$ sei der maximal zur Darstellung des Textobjekts $T$ zur Verfügung stehende Platz auf der Anzeigeeinrichtung, $s$ der tatsächlich vom Textobjekt $T$ benötigte Platz bzw. Darstellungsbereich;

- $p$ sei der Abstand zwischen zwei Buchstaben des Textobjekts $T$ ; mit $p_i$ werde der Abstand zwischen den beiden aufeinander folgenden Buchstaben $T_i$ und $T_{i+1}$ bezeichnet; und

- der Spacingfaktor $p_f$ bezeichne das Verhältnis zwischen der Weite $w_i$ des Buchstabens $T_i$ und dem Abstand $p_i$ zwischen den aufeinander folgenden Buchstaben $T_i$ und $T_{i+1}$.

Unter der Annahme, dass jeder Buchstabe des Textobjekts $T$ mit der gleichen Buchstabengröße dargestellt wird, folgt hieraus, dass zu gegebener Buchstabengröße $w$, gegebenem Zwischenraum $p$ und gegebenem Textobjekt $T$ der benötigte Darstellungsbereich $s$ zur Darstellung des Textobjekts $T$ bestimmt ist durch

$$s = n \times w + (n-1) \times p$$

Mit anderen Worten ist der zur Darstellung des Textobjekts $T$ benötigte Darstellungsbereich $s$ also bestimmt durch die Summe

$$s = w_1 + p_1 + w_2 + p_2 + \ldots + p_{n-1} + w_n .$$

Unter der weiteren Annahme, dass der Buchstabenabstand $p_i$ proportional von der jeweiligen Buchstabengröße $w_i$ abhängt, sowie durch die Angabe dieses Verhältnisses zwischen Buchstabenabstand und Buchstabengröße mittels des Spacingfaktors $p_f$ (z.B. $p_f = \frac{1}{3}$) kann der Abstand $p_i$ zwischen Buchstabe $i$ und Buchstabe $i$+1 durch $p_i = w_i \times p_f$ angegeben werden.

Damit ergibt sich zunächst einmal, dass der von einem Buchstaben insgesamt beanspruchte Platz $w'_i$ (= Darstellungsweite des Buchstabens) als Summe aus Buchstabengröße $w$ und Buchstabenabstand $p$ bestimmt ist. Unter Verwendung des Spacingfaktors $p_f$ wird somit als Darstellungsweite $w'_i$ für den Buchstaben $i$ erhalten als

$$w'_i = w_i + w_i \times p_f$$

Entsprechend ergibt sich bei gegebener Darstellungsweite $w'_i$ für einen Buchstaben $T_i$ die Buchstabengröße $w_i$ des $i$-ten Buchstabens durch $w_i = \frac{w'_i}{p_f + 1}$, und der Abstand zum Nachfolgebuchstaben zu $p_i = w'_i - w_i$.

Das durch das erfindungsgemäße Verfahren zu lösende Problem besteht nun darin, dass der von einem Textobjekt $T$ tatsächlich benötigte Darstellungsbereich $s$ größer ist als der auf der Anzeigeeinrichtung zur Verfügung stehende Platz $S$. Der vorhandene Platz $S$ zur Darstellung des Textobjekts $T$ ist bei gewählter Buchstabengröße $w$ und gewähltem Buchstabenabstand $p$ also zunächst einmal zu klein. Es gilt demnach "benötigter Darstellungsbereich > zur Verfügung stehender Platz", $s > S$, oder ausführlich geschrieben:

$$w_1 + p_1 + w_2 + p_2 + \ldots + p_{n-1} + w_n > S$$

Durch Einsetzen des Spacingfaktors $p_f = \dfrac{p_i}{w_i}$ lässt sich daraus erhalten:

$$w'_1 + w'_2 + \ldots + w'_n > S + \left( w_n \times p_f \right)$$

Mit dem Ziel der Unterbringung des gesamten Textobjekts $T$ innerhalb des zur Verfügung stehenden Platzes $S$ auf der Anzeigeeinrichtung ist jedoch unerwünscht, dass die Buchstabengröße $w_i$ für alle Buchstaben $T_i$ um denselben Faktor verkleinert wird, da dies zur Unlesbarkeit des Textobjekts $T$ aufgrund der dann insgesamt u.U. zu kleinen Schriftgröße führen kann.

Auch die Verringerung aller Abstände $p_i$ zwischen den Buchstaben $T_i$ ist ebenfalls nur bis zu einer bestimmten Untergrenze möglich. So soll - ebenfalls im Sinne der besseren Lesbarkeit - insbesondere ausgeschlossen werden, dass Überlappungen und/oder Berührungen zwischen benachbarten Buchstaben $T_i$ erfolgen. Trotz dieser Einschränkungen soll das gesamte Textobjekt $T$ jedoch lesbar, zumindest aber intuitiv erfassbar dargestellt werden. Die Skalierung aller Buchstaben $T_i$ mit einem konstanten Faktor ist somit zur Lösung des Problems ausgeschlossen.

Die erfindungsgemäße Lösung hingegen besteht darin, nur bestimmte Buchstaben des Textobjekts $T$ so zu verkleinern, dass der maximal zur Darstellung des Textobjekts $T$ auf der Anzeigeeinrichtung zur Verfügung stehende Platz $S$ mit dem tatsächlich von einem Textobjekt $T$ benötigten Darstellungsbereich $s$ übereinstimmt.

Hierzu wird eine Funktion $w'_i = f(i)$ gesucht, die zu einem vorgegebenen maximalen Darstellungsbereich der Größe $S$, sowie zu einem gegebenen Textobjekt $T$ mit Länge $n$ und bei ebenfalls gegebenem Spacingfaktor $p_f$ zu jedem Buchstaben $T_i$ eine entsprechende Buchstabengröße $w'_i$ so bestimmt, dass die Summe der Funktionswerte von $w'_i = f(i)$ über die Länge des Textobjekts $T$ kleiner oder gleich dem zur Verfügung stehenden Platz $S$ wird:

$$\Sigma_{i=1}^{n} f\left(i\right) \leq S \qquad\qquad\qquad (1)$$

Gleichzeitig soll der tatsächlich zur Darstellung des Textobjekts $T$ verwendete Darstellungsbereich $s = \Sigma_{i=1}^{n} f\left(i\right)$ möglichst maximal werden, im Idealfall also gleich dem zur Verfügung stehenden Platz $S$ sein.

Zur Vereinfachung soll ferner die Tatsache ignoriert werden, dass die Weite des letzten Buchstaben $T_n$ des Textobjekts $T$ damit eigentlich zu groß kalkuliert ist, da ja nach dem letzten Buchstaben $T_n$ kein weiterer Buchstabe folgt, und der für den letzten Buchstaben $T_n$ mit $w'_n$ berücksichtigte Zeichenabstand $p_n$ überflüssig ist. Dies führt jedoch lediglich dazu, dass rechnerisch ein kleiner Teil des zur Verfügung stehenden Platzes $S$ unberücksichtigt bleibt, was ggf. durch einfache Modifikation der nachfolgend dargestellten Berechnung korrigiert werden kann.

Die erfindungsgemäße Lösung umfasst dabei die beiden nachfolgend angegebenen wesentlichen Abschnitte:

- Darstellungstyp:

  Die Bestimmung geeigneter Funktionen $f(i)$ zur Darstellung der Buchstaben $T_i$ des Textobjekts $T$ betreffend optimale Lesbarkeit unter Berücksichtigung von Wahrnehmungskriterien, vgl. Bezugbuchstabe A in der Ablaufdarstellung gemäß **Fig. 6;** und

- Skalierung:

  Die Berechnung der Buchstabengrößen $w_i$ mittels $f(i)$, so dass die aufgestellte Bedingung - "Länge des dargestellten Text nicht größer als $S$ " - erfüllt ist, vgl. Bezugbuchstaben B bis G in der Ablaufdarstellung gemäß **Fig. 6.**

Es lassen sich verschiedene Darstellungsformen des Textobjekts $T$ mit variierenden Buchstabengrößen jeweils durch eine Funktion $f(i)$ dergestalt beschreiben, dass zu einer gegebenen Buchstabenposition i des darzustellenden Textobjekts $T$ die entsprechende Buchstabengröße $w_i$ berechnet wird. Dabei hat die Berechnung der Buchstabengröße jedoch zugleich in Abhängigkeit des zur Verfügung stehenden Platzes $S$ zu erfolgen. Letzteres erfolgt dabei durch entsprechende Parametrisierung der jeweils ausgewählten Funktion $f(i)$.

Insgesamt muss somit in Abhängigkeit des zur Verfügung stehenden Platzes $S$ und der Länge des Textobjekts $T$ bestimmt werden, wie zu einer gegebenen Darstellungsfunktion $f(i)$ die maximale Darstellungsweite $max$ und die minimale Darstellungsweite $min$ eines Buchstaben zu wählen ist, so dass das gesamte, mittels der Funktion $f(i)$ umgeformte Textobjekt $T$ nicht länger als der zur Verfügung stehende Platz $S$ ist.

Es lassen sich verschiedene Darstellungsfunktionen $f(i)$ für das Textobjekt $T$ finden, für die in der nachfolgenden Tabelle 1 einige Beispiele angegeben sind. Dabei entspricht die Auswahl einer der Textdarstellungsfunktionen $f(i)$ dem mit Bezugbuchstabe A versehenen Schritt in der Ablaufdarstellung gemäß **Fig. 6.**

**Tab. 1: Beispiele für Textdarstellungsfunktionen**

| Name | Fig. | Funktion |
|------|------|----------|
| $F1$ | 1 | $f\left(i\right) = \frac{min-max}{n-1} \times \left(i-1\right) + max$ |
| $F2$ | 2 | $f\left(i, j\right) = \begin{cases} \frac{min-max}{j-1} \times \left(i-1\right) + max & for \quad i < j \\ \\ min & else \end{cases}$ |

(fortgesetzt)

| Name | Fig. | Funktion |
|------|------|----------|
| F3 | 3 | $f(i) = \begin{cases} \frac{min-max}{j-1} \times (i-1) + max & for \quad i \leq j \\ \frac{max-min}{n-(j+1)} \times (i-(j+1)) + min & for \quad i > j \end{cases}$ |
| F4 | 4 | $f(i) = max - \frac{max-min}{k-1} \times floor\left(\frac{i-1}{j}\right)$ <br> mit $j = \frac{n}{k}$ und $k > 1$ Anzahl Teilstücke <br> mit $j \leq n$ |
| F5 | 5 | $f(i) = \begin{cases} max & for & i \leq j \\ min & for & j < i \leq n - j \\ max & else \end{cases}$ <br> mit $j < \frac{n}{2}$ <br> mit $j \leq n$ |

Nachfolgend wird die Vorgehensweise bei der Bestimmung der Parameter *max* (maximale Darstellungsweite) und *min* (minimale Darstellungsweite) anhand beispielhafter Betrachtung der Funktion *F*1 dargelegt.

Gemäß der Aufgabenstellung, nach welcher der maximal zur Darstellung des Textobjekts *T* zur Verfügung stehende Platz *S* mit dem tatsächlich von einem Textobjekt *T* benötigten Darstellungsbereich *s* übereinzustimmen hat, gilt mit (1)

$$\Sigma_{i=1}^{n} f(i) = S \qquad\qquad (2)$$

Mit *f (i)* = *F*1 gemäß Tab. 1 wird hieraus

$$\Sigma_{i=1}^{n} \frac{min - max}{n-1} \times (i-1) + max = S \qquad\qquad (3)$$

Von vornherein gegeben sind dabei der zur Verfügung stehende Platz *S* und die Anzahl der Buchstaben *n*. Mit dem Hintergrund der Erkennbarkeit auch noch der kleinsten Buchstaben des Textobjekts *T* wird hier der Fall betrachtet, dass hier der Parameter *min* (minimale Darstellungsweite) ebenfalls gegeben ist. Ebensogut lässt sich das dargestellte Verfahren aber auch unter Festlegung der maximalen Darstellungsweite *max* anstelle der Festlegung der minimalen Darstellungsweite *min* ausführen.

Wird die Bedingung (3) betrachtet, so lässt sich erkennen, dass man anstelle der dort enthaltenen Summe aller Buchstaben-Darstellungsweiten auch das Integral von 1 bis *n* über *F*1 berechnen könnte. Somit hat das genannte Integral genau mit dem maximal zur Darstellung des Textobjekts *T* zur Verfügung stehenden Platz *S* übereinzustimmen, damit das entsprechend umgeformte Textobjekt *T* innerhalb des zur Verfügung stehenden Platzes *S* untergebracht werden kann.

Wenn also bezüglich *F*1 geeignete Werte für die Parameter *min* und *max* gefunden werden können dergestalt, dass die Summe der Darstellungsweiten $w'_i$ gleich dem zur Verfügung stehenden Platz $S$ ist, wenn also mit anderen Worten das Integral von $F1$ gleich $S$ wird, dann lässt sich das Textobjekt $T$ so umformen, dass es gerade den gesamten zur Verfügung stehenden Platz $S$ einnimmt.

Für die Darstellungsfunktion $F1$ ist somit das nachstehende Integral zu betrachten. Dieser Schritt korrespondiert in der Darstellung der **Fig. 6** mit dem Bezugbuchstaben B.

$$\int_1^m F1(x)dx \qquad\qquad (4)$$

Mittels dieser Integration ergibt sich ein Ausdruck für die Parameter max und min unter der Bedingung (2), zur Darstellung den gesamten zur Verfügung stehenden Platz S zu nutzen.

Dieser Ermittlung der Parameter *max* (maximale Darstellungsweite) und *min* (minimale Darstellungsweite) entspricht dabei Bezugbuchstabe C in der Ablaufdarstellung gemäß **Fig. 6.**

Entsprechend dem dargestellten Vorgehen lassen sich für die anderen in der weiter oben stehenden Tabelle 1 angegebenen Beispiele für Darstellungsfunktionen *f(i), F2* bis *F5*, (vgl. auch **Fig. 2** bis **5**) ebenfalls dementsprechende Formeln zur Bestimmung der Parameter *max* und *min* ermitteln. Dies erfolgt ganz analog jeweils mittels Integration von *f(i),* somit anhand Bestimmung des Flächeninhalts unter der Darstellungsfunktion *f(i).*

Damit ist im Ergebnis ein allgemeines Verfahren bereitgestellt, bei dem zu einer gewünschten Textdarstellung mit variierender Buchstabengröße $w'_i$ in einem ersten Schritt (Bezugbuchstabe A in **Fig. 6**) eine Textdarstellungsfunktion *f(i)* festgelegt wird, die die beiden Parameter *min* und *max* enthält.

In einem weiteren Schritt (Bezugbuchstabe B in **Fig. 6**) wird sodann mittels Integration von *f (i)* der Flächeninhalt unter der gewählten Textdarstellungsfunktion *f (i)* in Abhängigkeit von *min* und *max* bestimmt, und es werden hieraus mittels Auflösung der Integralgleichung die Parameterformeln $F_{min}$ und $F_{max}$ zur Ermittlung des jeweils unbekannten Parameters *min* oder *max* abgeleitet (Bezugbuchstabe C in **Fig. 6**).

Je nach Anwendungsfall, bei dem entweder eine Obergrenze (*max*) oder eine Untergrenze (*min*) für die Buchstabengröße $w'_i$ gegeben ist (Bezugbuchstabe D in **Fig. 6**), wird sodann in einem weiteren Schritt der jeweils andere, noch unbestimmte Parameterwert *min* oder *max* durch Einsetzen des bekannten Parameterwerts *max* oder *min* in die Parameterformeln $F_{min}$ und $F_{max}$ bestimmt (Bezugbuchstaben E bzw. F in **Fig. 6**).

Schließlich wird zu jedem Buchstaben, bzw. mittels Schleifendurchlauf für jeden Wert von *i* zwischen 1 und *n* - anhand der Buchstabenposition *i* im Textobjekt *T* und anhand des gegebenen maximal zur Verfügung stehenden Platzes $S$ - die Buchstabengröße $w'_i = f(i)$ berechnet (vgl. Bezugbuchstabe G in **Fig. 6**).

Im Ergebnis wird somit deutlich, dass mit der Erfindung eine Vorrichtung und ein Verfahren zur Erstellung eines Textobjekts geschaffen wird, mit der bzw. dem sich die im Stand der Technik anzutreffenden Beschränkungen bei der Textdarstellung insbesondere auf Bildschirmen mit geringen Abmessungen überwinden lassen. Gerade im Bereich der Navigationsgeräte ermöglicht die Erfindung somit, auch größere Textobjekte wie beispielsweise lange Straßenbezeichnungen auf kleinen Navigationsbildschirmen zur Anzeige bringen zu können, ohne dass dabei anderweitig benötigter, wertvoller Platz auf dem Bildschirm verloren geht.

Die Erfindung liefert damit einen entscheidenden Beitrag zur Verbesserung insbesondere der Darstellung von Straßenkarten auf den Bildschirmen von Navigationsgeräten, sowie zur Verbesserung der intuitiven Erfassbarkeit des Bildschirminhalts und damit auch der Sicherheit des Nutzers bei der Benutzung von Navigationsgeräten im Straßenverkehr.

**Patentansprüche**

**1.** Anzeigevorrichtung mit einer Prozessoreinrichtung zur Erzeugung einer grafischen Anzeige einer geographischen Darstellung auf einer grafischen Anzeigeeinheit, die geographische Darstellung umfassend zumindest ein geographisches Merkmal und ein aus einer Mehrzahl von Buchstaben (Ti) bestehendes Textobjekt (T) zur Kennzeichnung des geographischen Merkmals, wobei die Prozessoreinrichtung zur Umformung des Textobjekts (T) eingerichtet ist, **dadurch gekennzeichnet, dass**

a) die Prozessoreinrichtung eingerichtet ist zur Auswahl eines mathematischen Funktionszusammenhangs (Fi) zwischen der Position (i) eines Buchstabens (Ti) innerhalb des Textobjekts (T) und der Buchstabenweite (w'i), wobei der Funktionszusammenhang (Fi) zumindest die folgenden Variablen umfasst:

i. laufende Nummer des Buchstabens (i);

ii. Anzahl der Buchstaben im Textobjekt (n);

iii. Buchstabenweite (w'i) des aktuellen Buchstabens (Ti); maximale Buchstabenweite (max); und minimale Buchstabenweite (min);und wobei der mathematische Funktionszusammenhang zur Umformung des Textobjekts (T) dient, wobei das umgeformte Textobjekt (T) mehrere Buchstaben (Ti) umfasst, deren Buchstabenweiten (w'i, wi) relativ zu den Buchstabenweiten der anderen Buchstaben des Textobjekts (T) und/oder deren Abstände relativ zu den Abständen der anderen Buchstaben des Textobjekts (T) verkleinert sind;

b) die Prozessoreinrichtung eingerichtet ist zur Ermittlung der maximalen Buchstabenweite (max) oder der minimalen Buchstabenweite (min) der Buchstaben durch Bildung des Integrals über dem mathematischen Funktionszusammenhang (Fi) von 1 bis zur Anzahl (n) der Buchstaben im Textobjekt (T);

Gleichsetzung des gebildeten Integrals mit der für die Darstellung des Textobjekts maximal zulässigen Länge (S); und Auflösung der Integralsgleichung nach der Unbekannten "minimale Buchstabenweite" (min), oder nach der Unbekannten "maximale Buchstabenweite" (max);

c) die Prozessoreinrichtung eingerichtet ist zur Ermittlung der Buchstabenweite (w'i) jedes Buchstabens (Ti) des Textobjekts (T) und/oder der jeweiligen Abstände (pi) zwischen den Buchstaben des Textobjekts (T) durch Einsetzen der Zahlenwerte für die maximal zur Verfügung stehende Länge (S), für die minimale Buchstabenweite (min), für die maximale Buchstabenweite (max), für die Anzahl der Buchstaben im Textobjekt (n) und für die laufende Nummer des aktuellen Buchstabens (i) in den mathematischen Funktionszusammenhang;

d) die Prozessoreinrichtung eingerichtet ist zur Ansteuerung der Anzeigeeinheit in Übereinstimmung mit den ermittelten Größen (w'i, wi) und/oder Abständen (pi) der einzelnen Buchstaben des Textobjekts.

2. Vorrichtung nach Anspruch 1,
**dadurch gekennzeichnet,**
**dass** zumindest ein Buchstabe am Anfang des Textobjekts ($T$) die Originalgröße aufweist, während nachfolgende Buchstaben relativ zur Originalgröße verkleinert sind.

3. Vorrichtung nach Anspruch 1 oder 2,
**dadurch gekennzeichnet,**
**dass** zumindest ein Buchstabe am Anfang des Textobjekts ($T$) die Originalgröße aufweist, während eine Mehrzahl nachfolgender Buchstaben in Leserichtung sukzessive kleiner werdende Buchstabenweiten ($w_i$) und/oder Abstände ($p_i$) aufweist.

4. Vorrichtung nach einem der Ansprüche 1 bis 3,
**dadurch gekennzeichnet,**
**dass** zumindest zwei Buchstaben am Ende des Textobjekts ($T$) dieselben relativen Buchstabenweiten ($w'_i$, $w_i$) und/oder Abstände ($p_i$) aufweisen.

5. Vorrichtung nach einem der Ansprüche 1 bis 4,
**dadurch gekennzeichnet,**
**dass** jeweils zumindest ein Buchstabe am Anfang sowie am Ende des Textobjekts ($T$) die Originalgröße aufweist, während dazwischen liegende Buchstaben relativ zur Originalgröße verkleinert sind und/oder verkleinerte Abstände ($p_i$) aufweisen.

6. Vorrichtung nach einem der Ansprüche 1 bis 5,
**dadurch gekennzeichnet,**
**dass** zumindest ein Buchstabe am Anfang des Textobjekts ($T$) die Originalgröße aufweist, während eine Mehrzahl nachfolgender Buchstaben in Leserichtung sukzessive kleinere Buchstabenweiten ($w_i$) und/oder Abstände ($p_i$) sowie eine Mehrzahl weiterer Buchstaben in Leserichtung sukzessive zunehmende Buchstabenweiten ($w'_i$, $w_i$) und/oder Abstände ($p_i$) aufweist.

7. Vorrichtung nach einem der Ansprüche 1 bis 6,
**dadurch gekennzeichnet,**
**dass** die Buchstaben jeweils zumindest einer Wortsilbe am Anfang sowie am Ende des Textobjekts ($T$) die Originalgröße aufweisen, während die Buchstaben zumindest einer dazwischen liegenden Wortsilbe relativ zur Originalgröße verkleinert sind und/oder verkleinerte Abstände ($p_i$) aufweisen.

**8.** Vorrichtung nach einem der Ansprüche 1 bis 7,
**dadurch gekennzeichnet,**
**dass** die Buchstabenweiten ($w'_i$, $w_i$) der verkleinerten Buchstaben lediglich in einer Dimension verändert sind.

**9.** Verfahren zur Erzeugung einer grafischen Anzeige eines aus einer Mehrzahl von Buchstaben (Ti) bestehenden umgeformten Textobjekts (T) zur Kennzeichnung eines geographischen Merkmals in einer geographischen Darstellung, die auch das geographische Merkmal selbst umfasst, auf einer grafischen Anzeigeeinheit mittels einer Prozessoreinrichtung, wobei das Verfahren **gekennzeichnet ist durch** die nachfolgenden Verfahrensschritte:

a) Auswahl eines mathematischen Funktionszusammenhangs (Fi) zwischen der Position (i) eines Buchstabens (Ti) innerhalb des Textobjekts (T) und der Buchstabenweite (w'i), wobei der Funktionszusammenhang (Fi) zumindest die folgenden Variablen umfasst:

i. laufende Nummer des Buchstabens (i);
ii. Anzahl der Buchstaben im Textobjekt (n);
iii. Buchstabenweite (w'i) des aktuellen Buchstabens (Ti); maximale Buchstabenweite (max); und minimale Buchstabenweite (min); und wobei der mathematische Funktionszusammenhang zur Umformung des Textobjekts (T) dient, wobei das umgeformte Textobjekt (T) mehrere Buchstaben (Ti) umfasst, deren Buchstabenweiten (w'i, wi) relativ zu den Buchstabenweiten der anderen Buchstaben des Textobjekts (T) und/oder deren Abstände relativ zu den Abständen der anderen Buchstaben des Textobjekts (T) verkleinert sind;

b) Ermittlung der maximalen Buchstabenweite (max) oder der minimalen Buchstabenweite (min) der Buchstaben **durch** Bildung des Integrals über dem mathematischen Funktionszusammenhang (Fi) von 1 bis zur Anzahl (n) der Buchstaben im Textobjekt (T); Gleichsetzung des gebildeten Integrals mit der für die Darstellung des Textobjekts maximal zulässigen Länge (S); und
Auflösung der Integralsgleichung nach der Unbekannten "minimale Buchstabenweite" (min), oder nach der Unbekannten "maximale Buchstabenweite" (max);
c) Ermittlung der Buchstabenweite (w'i) jedes Buchstabens (Ti) des Textobjekts (T) und/oder der jeweiligen Abstände (pi) zwischen den Buchstaben des Textobjekts (T) **durch** Einsetzen der Zahlenwerte für die maximal zur Verfügung stehende Länge (S), für die minimale Buchstabenweite (min), für die maximale Buchstabenweite (max), für die Anzahl der Buchstaben im Textobjekt (n) und für die laufende Nummer des aktuellen Buchstabens (i) in den mathematischen Funktionszusammenhang;
d) Ansteuerung der Anzeigeeinheit in Übereinstimmung mit den ermittelten Größen (w'i, wi) und/oder Abständen (pi) der einzelnen Buchstaben des Textobjekts **durch** die Prozessoreinrichtung.

**10.** Verfahren nach Anspruch 9,
**dadurch gekennzeichnet,**
**dass** der mathematische Funktionszusammenhang ($F_i$) einer Geradengleichung mit negativer Steigung entspricht.

**11.** Verfahren nach Anspruch 9,
**dadurch gekennzeichnet,**
**dass** der mathematische Funktionszusammenhang ($F_i$) einer fallenden Kurve mit Linkskrümmung entspricht.

**12.** Verfahren nach Anspruch 9,
**dadurch gekennzeichnet,**
**dass** der mathematische Funktionszusammenhang ($F_i$) einer fallenden Kurve mit sich anschließendem horizontal verlaufendem Endabschnitt entspricht.

**13.** Verfahren nach Anspruch 9,
**dadurch gekennzeichnet,**
**dass** der mathematische Funktionszusammenhang ($F_i$) einer im Bereich des Textanfangs fallenden und im Bereich des Textendes wieder zunehmenden Kurve entspricht.

**14.** Verfahren nach Anspruch 9,
**dadurch gekennzeichnet,**
**dass** der mathematische Funktionszusammenhang ($F_i$) einer abnehmenden Gauß-Klammer entspricht.

**15.** Verfahren nach Anspruch 9,

**dadurch gekennzeichnet,**
**dass** der mathematische Funktionszusammenhang ($F_i$) einer im Bereich des Textanfangs abnehmenden und im Bereich des Textendes wieder zunehmenden Gauß-Klammer entspricht.

**16.** Verfahren nach Anspruch 14 oder 15,
**dadurch gekennzeichnet,**
**dass** Größensprünge innerhalb des Textobjekts ($T$) an Silbenübergängen platziert werden.

**Claims**

**1.** A display device with a processor for generating a graphic display of a geographic illustration on a graphic display unit, wherein the geographic illustration comprises at least one geographic characteristic and one text object ($T$) that consists of a multitude of letters ($T_i$) and serves for identifying the geographic characteristic, and wherein the processor is designed for converting the text object ($T$),
**characterized in that**

a) the processor is designed for selecting a mathematical functional correlation ($F_i$) between the position ($i$) of a letter ($T_i$) within the text object ($T$) and the letter width ($w'_i$), wherein the functional correlation ($F_i$) comprises at least the following variables

i. serial number of the letter ($i$)
ii. number of letters in text object ($n$);
iii. letter width ($w'_i$) of the current letter ($T_i$); maximum letter width ($max$); and minimum letter with ($min$); and

wherein the mathematical functional correlation serves for converting the text object ($T$), wherein the converted text object ($T$) comprises several letters ($T_i$), the letter widths ($w'_i$, $w_i$) of which are reduced relative to the letter widths of the other letters of the text object ($T$) and/or the spacings of which are reduced relative to the spacings between the other letters of the text object ($T$);
b) the processor is designed for determining the maximum letter width ($max$) or the minimum letter width ($min$) of the letters by forming the integral from 1 up to the number ($n$) of letters in the text object ($T$) over the mathematical functional correlation ($F_i$);
equating the formed integral with the maximum permissible length ($S$) of the text object; and
solving the integral equation for the unknown "minimum letter width" ($min$) or for the unknown "maximum length width" *(max);*
c) the processor is designed for determining the letter width ($w'_i$) of each letter ($T_i$) of the text object ($T$) and/or the respective spacings ($p_i$) between the letters of the text object ($T$) by inserting the numerical values for the maximum available length ($S$), for the minimum letter width *(min),* for the maximum letter width *(max),* for the number of letters in the text object ($n$) and for the serial number of the current letter ($i$) in the mathematical functional correlation;
d) the processor is designed for controlling the display unit in accordance with the determined font sizes ($w'_i$, $w_i$) and/or spacings ($p_i$) of the individual letters of the text object.

**2.** The device according to Claim 1,
**characterized in that**
at least one letter at the beginning of the text object ($T$) has the original font size while ensuing letters are reduced relative to the original font size.

**3.** The device according to Claim 1 or 2,
**characterized in that**
at least one letter at the beginning of the text object ($T$) has the original font size while a multitude of ensuing letters has letter widths ($w_i$) and/or spacings ($p_i$) that become successively smaller in the reading direction.

**4.** The device according to one of Claims 1 to 3,
**characterized in that**
at least two letters at the end of the text object ($T$) have the same relative letter widths ($w'_i$, $w_i$) and/or spacings ($p_i$).

**5.** The device according to one of Claims 1 to 4,

**characterized in that**
at least one respective letter at the beginning and at the end of the text object ($T$) has the original font size while letters lying in between are reduced relative to the original font size and/or spaced apart by smaller spacings ($p_i$).

6. The device according to one of Claims 1 to 5,
   **characterized in that**
   at least one letter at the beginning of the text object ($T$) has the original font size while a multitude of ensuing letters has letter widths ($w_i$) and/or spacings ($p_i$) that become successively smaller in the reading direction and a multitude of additional letters has letter widths ($w'_i$, $w_i$) and/or spacings ($p_i$) that become successively larger in the reading direction.

7. The device according to one of Claims 1 to 6,
   **characterized in that**
   the letters of at least one respective syllable at the beginning and at the end of the text object ($T$) have the original font size while the letters of at least one syllable lying in between are reduced relative to the original font size and/or spaced apart by smaller spacings ($p_i$).

8. The device according to one of Claims 1 to 7,
   **characterized in that**
   the letter widths ($w'_i$, $w_i$) of the reduced letters are changed in one dimension only.

9. A method for generating a graphic display of a converted text object ($T$) that consists of a multitude of letters ($T_i$) for identifying a geographic characteristic in a geographic illustration that also includes the geographic characteristic itself on a graphic display unit by means of a processor, wherein said method is **characterized by** the following process steps:

   a) selecting a mathematical functional correlation ($F_i$) between the position ($i$) of a letter ($T_i$) within the text object ($T$) and the letter width ($w'_i$), wherein the functional correlation ($F_i$) comprises at least the following variables

   i. serial number of the letter ($i$);
   ii. number of letters in text object ($n$);
   iii. letter width ($w'_i$) of the current letter ($T_i$); maximum letter width ($max$); and minimum letter with ($min$); and wherein the mathematical functional correlation serves for converting the text object ($T$), wherein the converted text object ($T$) comprises several letters ($T_i$), the letter widths ($w'_i$, $w_i$) of which are reduced relative to the letter widths of the other letters of the text object ($T$) and/or the spacings of which are reduced relative to the spacings between the other letters of the text object ($T$);

   b) determining the maximum letter width ($max$) or the minimum letter width ($min$) of the letters by forming the integral from 1 up to the number ($n$) of letters in the text object ($T$) over the mathematical functional correlation ($F_i$); equating the formed integral with the maximum permissible length ($S$) of the text object ($T$); and solving the integral equation for the unknown "minimum letter width" ($min$) or for the unknown "maximum length width" ($max$);
   c) determining the letter width ($w'_i$) of each letter ($T_i$) of the text object ($T$) and/or the respective spacings ($p_i$) between the letters of the text object ($T$) by inserting the numerical values for the maximum available length ($S$), for the minimum letter width ($min$), for the maximum letter width ($max$), for the number of letters in the text object ($n$) and for the serial number of the current letter ($i$) in the mathematical functional correlation;
   d) controlling the display unit in accordance with the determined font sizes ($w'_i$, $w_i$) and/or spacings ($p_i$) of the individual letters of the text object by means of the processor.

10. The method according to Claim 9,
    **characterized in that**
    the mathematical functional correlation ($F_i$) corresponds to a linear equation with negative gradient.

11. The method according to Claim 9,
    **characterized in that**
    the mathematical functional correlation ($F_i$) corresponds to a descending curve with leftward curvature.

12. The method according to Claim 9,

**characterized in that**
the mathematical functional correlation ($F_i$) corresponds to a descending curve with an ensuing end section that extends horizontally.

13. The method according to Claim 9,
**characterized in that**
the mathematical functional correlation ($F_i$) corresponds to a curve that descends in the region of the beginning of the text and reascends in the region of the end of the text.

14. The method according to Claim 9,
**characterized in that**
the mathematical functional correlation ($F_i$) corresponds to a descending Gaussian curve.

15. The method according to Claim 9,
**characterized in that**
the mathematical functional correlation ($F_i$) corresponds to a Gaussian curve that descends in the region of the beginning of the text and reascends in the region of the end of the text.

16. The method according to Claim 14 or 15,
**characterized in that**
abrupt changes in the font size within the text object ($T$) are positioned at transitions between syllables.


**Revendications**

1. Dispositif d'affichage avec un dispositif processeur pour la génération d'un affichage graphique d'une représentation géographique sur une unité d'affichage graphique, la représentation géographique comprenant au moins une caractéristique géographique et un objet textuel ($T$) composé d'une pluralité de lettres ($T_i$) pour identifier la caractéristique géographique, le dispositif processeur étant agencé pour convertir l'objet textuel ($T$),
**caractérisé en ce que**

a) le dispositif processeur est agencé pour sélectionner une corrélation fonctionnelle mathématique ($Fi$) entre la position ($i$) d'une lettre ($T_i$) dans l'objet textuel ($T$) et la largeur ($w'_i$) de la lettre, la corrélation fonctionnelle ($F_i$) comprenant au moins les variables suivantes:

i. le numéro de série de la lettre ($i$);
ii. le nombre de lettres dans l'objet textuel ($n$);
iii. la largeur ($w'_i$) de la lettre courante ($T_i$); la largeur maximale de lettres *(max)* et la largeur minimale de lettres *(min)*; la corrélation fonctionnelle mathématique servant à convertir l'objet textuel ($T$), l'objet textuel ($T$) converti comprenant plusieurs lettres ($T_i$), les largeurs ($w'_i$, $w_i$) desdites lettres étant diminuées par rapport aux largeurs des autres lettres de l'objet textuel ($T$) et/ou les espacements entre lesdites lettres étant réduits par rapport aux espacements entre les autres lettres de l'objet textuel ($T$);

b) le dispositif processeur est agencé pour déterminer la largeur maximale de lettres (*max*) ou la largeur minimale de lettres *(min)* par la formation de l'intégrale de 1 jusqu'au nombre ($n$) de lettres dans l'objet textuel ($T$) sur la corrélation fonctionnelle mathématique ($F_i$);

égaliser l'intégrale formée avec la longueur ($S$) maximale admissible pour la représentation de l'objet textuel ($T$); et résoudre l'équation intégrale pour l'inconnue «la largeur minimale de lettres» *(min)* ou pour l'inconnue «la largeur maximale de lettres» *(max);*

c) le dispositif processeur est agencé pour déterminer la largeur ($w'_i$) de chaque lettre ($T_i$) de l'objet textuel ($T$) et/ou des espacements ($p_i$) respectifs entre les lettres de l'objet textuel ($T$) par l'insertion de valeurs numériques pour la longueur ($S$) maximale disponible, pour la largeur minimale de lettres ($min$), pour la largeur maximale de lettres ($max$), pour le nombre de lettres dans l'objet textuel ($n$) et pour le numéro de série de la lettre courante ($i$) dans la corrélation fonctionnelle mathématique;
d) le dispositif processeur est agencé pour commander l'unité d'affichage en correspondance avec les largeurs ($w'_i$, $w_i$) de lettres déterminées et/ou les espacements ($p_i$) entre les lettres individuelles de l'objet textuel.

**2.** Dispositif selon la revendication 1,
**caractérisé en ce qu'**
au moins une lettre au début de l'objet textuel (*T*) présente la largeur originale alors que les lettres suivantes sont diminuées par rapport à la largeur originale.

**3.** Dispositif selon la revendication 1 ou 2,
**caractérisé en ce qu'**
au moins une lettre au début de l'objet textuel (*T*) présente la largeur originale alors qu'une pluralité de lettres suivantes présente des largeurs ($w_i$) et/ou des espacements ($p_i$) réduits de manière successive dans le sens de la lecture.

**4.** Dispositif selon l'une quelconque des revendications 1 à 3,
**caractérisé en ce qu'**
au moins deux lettres à la fin de l'objet textuel (*T*) présentent les mêmes largeurs ($w'_i$, $w_i$) relatives et/ou les mêmes espacements ($p_i$).

**5.** Dispositif selon l'une quelconque des revendications 1 à 4,
**caractérisé en ce que**
respectivement au moins une lettre au début ainsi qu'à la fin de l'objet textuel (*T*) présente la largeur originale alors que les lettres interposées sont diminuées par rapport à la largeur originale et/ou présentent des espacements ($p_i$) réduits.

**6.** Dispositif selon l'une quelconque des revendications 1 à 5,
**caractérisé en ce qu'**
au moins une lettre au début de l'objet textuel (*T*) présente la largeur originale tandis qu'une pluralité de lettres suivantes présente des largeurs ($w_i$) et/ou des espacements ($p_i$) réduits de manière successive dans le sens de la lecture, et une pluralité de lettres additionnelles présente des largeurs ($w'_i$, $w_i$) et/ou des espacements ($p_i$) augmentant de manière successive dans le sens de la lecture.

**7.** Dispositif selon l'une quelconque des revendications 1 à 6,
**caractérisé en ce que**
respectivement les lettres d'au moins une syllabe de mot au début ainsi qu'à la fin de l'objet textuel (*T*) présentent la largeur originale tandis que les lettres d'au moins une syllabe de mot interposée sont diminuées par rapport à la largeur originale et/ou présentent des espacements ($p_i$) réduits.

**8.** Dispositif selon l'une quelconque des revendications 1 à 7,
**caractérisé en ce que**
les largeurs ($w'_i$, $w_i$) des lettres diminuées sont modifiées seulement dans une dimension.

**9.** Procédé pour la génération d'un affichage graphique d'un objet textuel (*T*) converti composé d'une pluralité de lettres ($T_i$) pour identifier une caractéristique géographique dans une représentation géographique, également comprenant la caractéristique graphique elle-même, sur une unité d'affichage graphique au moyen d'une unité processeur, le procédé étant **caractérisé par** les étapes de procédé suivantes:

    a) sélectionner une corrélation fonctionnelle mathématique ($F_i$) entre la position (*i*) d'une lettre ($T_i$) dans l'objet textuel (*T*) et la largeur de lettres ($w'_i$), la corrélation fonctionnelle ($F_i$) comprenant au moins les variables suivantes:

        i. le numéro de série d'une lettre (*i*);
        ii. le nombre de lettres dans l'objet textuel (*n*);
        iii. la largeur ($w'_i$) de la lettre courante ($T_i$); la largeur maximale de lettres (*max*); et la largeur de minimale de lettres (*min*);
        la corrélation fonctionnelle mathématique servant à convertir l'objet textuel (*T*), l'objet textuel (*T*) converti comprenant plusieurs lettres ($T_i$), les largeurs ($w'_i$, $w_i$) desdites lettres étant diminuées par rapport aux largeurs des autres lettres de l'objet textuel (*T*) et/ou les espacements desdites lettres étant réduits par rapport aux espacements entre les autres lettres de l'objet textuel (*T*);

    b) déterminer la largeur maximale de lettres *(max)* ou la largeur minimale de lettres *(min)* par la formation de l'intégrale de 1 jusqu'au nombre ($n$) de lettres dans l'objet textuel ($T$) sur la corrélation fonctionnelle mathématique ($F_i$);

égaliser l'intégrale formée avec la longueur ($S$) maximale admissible pour la représentation de l'objet textuel; et résoudre l'équation intégrale pour l'inconnue «la largeur minimale de lettres» ($min$) ou pour l'inconnue «la largeur maximale de lettres» ($max$);

c) déterminer la largeur ($w'_i$) de chaque lettre ($T_i$) de l'objet textuel ($T$) et/ou des espacements ($p_i$) respectifs entre les lettres de l'objet textuel ($T$) par l'insertion de valeurs numériques pour la longueur ($S$) maximale disponible, pour la largeur minimale de lettres ($min$), pour la largeur maximale de lettres ($max$), pour le nombre de lettres dans l'objet textuel ($n$) et pour le numéro de série de la lettre courante ($i$) dans la corrélation fonctionnelle mathématique;

d) commander l'unité d'affichage en correspondance avec les largeurs ($w'_i$, $w_i$) déterminées et/ou avec les espacements ($p_i$) des lettres individuelles de l'objet textuel par l'unité processeur.

**10.** Procédé selon la revendication 9,
**caractérisé en ce que**
la corrélation fonctionnelle mathématique ($F_i$) correspond à une équation linéaire ayant une pente négative.

**11.** Procédé selon la revendication 9,
**caractérisé en ce que**
la corrélation fonctionnelle mathématique ($F_i$) correspond à une courbe décroissante ayant une courbure dirigée vers la gauche.

**12.** Procédé selon la revendication 9,
**caractérisé en ce que**
la corrélation fonctionnelle mathématique ($F_i$) correspond à une courbe décroissante ayant une section terminale successive s'étendant horizontalement.

**13.** Procédé selon la revendication 9,
**caractérisé en ce que**
la corrélation fonctionnelle mathématique ($F_i$) correspond à une courbe décroissant dans la région du début du texte et recroissant dans la région de la fin du texte.

**14.** Procédé selon la revendication 9,
**caractérisé en ce que**
la corrélation fonctionnelle mathématique ($F_i$) correspond à une courbe de Gauss décroissante.

**15.** Procédé selon la revendication 9,
**caractérisé en ce que**
la corrélation fonctionnelle mathématique ($F_i$) correspond à une courbe de Gauss décroissant dans la région du début du texte et recroissant dans la région de la fin du texte.

**16.** Procédé selon la revendication 14 ou 15,
**caractérisé en ce que**
les changements abrupts dans les largeurs des lettres dans l'objet textuel (T) sont placés à des points de transition entre les syllabes.

Fig. 1

Fig. 1a

Fig. 2

EP 1 921 422 B1

Fig. 3

Schottmuellergasse

19

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1174843 A

- US 2006235825 A1